# EUROPÄISCHE PATENTSCHRIFT

(11) **EP 2 177 793 B1**
(45) Veröffentlichungstag und Bekanntmachung des Hinweises auf die Patenterteilung: **19.12.2012**
(21) Anmeldenummer: 09012963.6
(22) Anmeldetag: 14.10.2009
(51) Int. Cl.: F16J 15/06, F16J 15/02, F16K 27/00

(54) **Vorrichtung**
Device
Dispositif

(30) Priorität: 17.10.2008 DE 102008051856
(43) Veröffentlichungstag der Anmeldung: 21.04.2010
(73) Patentinhaber: AB SKF, 415 50 Göteborg (SE)
(72) Erfinder: Vom Stein, Hans-Joachim, 51519 Odenthal (DE)
(74) Vertreter: Kohl, Thomas

(56) Entgegenhaltungen:
- EP-A- 0 781 973
- DE-A1- 3 711 479
- DE-A1- 10 119 892
- DE-A1-102006 039 355

## Beschreibung

Die Erfindung betrifft eine Vorrichtung.

Aus dem Stand der Technik ist beispielsweise für einen Ventilblock bei einem elektrohydraulischen Ventilsteuerungssystem eines Verbrennungsmotors eine Abdeckung bekannt, die für einen Volumenausgleich für von den Ventilen mit hohem Druck ausgestoßenes Öl mit entsprechenden Ausgleichstaschen ausgebildet ist. Dabei kann das Öl nur durch einen definierten Durchflussquerschnitt in die Ausgleichstaschen ein- und austreten, wozu die Ausgleichstaschen mit einem Abschlussblech mit einer entsprechenden Durchdringung verschlossen sind. Die Abdeckung wird dabei über einen Flüssigdichtstoff bzw. eine Metalldichtung öldicht mit dem Ventilblock verbunden.

Ein anderes Beispiel ist in DE 102006039355 A1 offenbart.

Davon ausgehend ist es eine Aufgabe der Erfindung, eine Vorrichtung zu schaffen, die sich gegenüber dem eingangs beschriebenen Stand der Technik unter anderem durch einen verbesserten Zusammenhalt der einzelnen Komponenten auszeichnet.

Die Aufgabe wird durch den Gegenstand des Anspruchs 1 gelöst. Vorteilhafte Ausgestaltungen sind in den Unteransprüchen beschrieben.

Mit der erfindungsgemäßen Vorrichtung wird ein Modul geschaffen, bei dem das Deckelelement, das Begrenzungselement und das Dichtelement eine bauliche, ineinander unverlierbar gehaltene Einheit bilden. Dabei nimmt das Dichtelement eine Doppelfunktion wahr. Es sorgt für eine Abdichtung des Deckelelements gegenüber der Gegenfläche und verbindet gleichzeitig das Begrenzungselement fest mit dem Deckelelement. Gegenüber einer Lösung mit vielen einzelnen Komponenten wird durch die erfindungsgemäße Vorrichtung die Montage entsprechend vereinfacht. Dies trägt unter anderem mit einer möglichen Ausbildung des Deckel- und des Begrenzungselements als tiefgezogene Stahlblechbauteile und des Dichtelements aus angespritztem Elastomermaterial zu einer verbesserten Kostenposition bei. Dadurch, dass das Dichtelement integraler Bestandteil der Einheit ist, wird auch eine sichere Abdichtung sozusagen automatisch sichergestellt, was von besonderer Bedeutung ist, da auch bei Abkühlung des Gesamtsystems, beispielsweise im eingangs beschriebenen Anwendungsfall gewährleistet sein muss, dass die vom Deckelelement umschlossenen Volumina immer luftfrei bleiben.

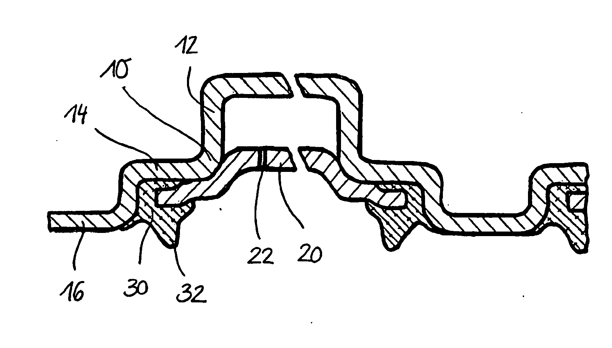

Weitere Vorteile, Merkmale und Einzelheiten der Erfindung ergeben sich aus dem im Folgenden beschriebenen Ausführungsbeispiel der Erfindung anhand der Figur.

Die Figur zeigt als ein Ausführungsbeispiel der Erfindung ausschnittsweise und teilsweise unterbrochen die Längsschnittflächen eines Längsschnitts durch eine Abdeckvorrichtung. Die Abdeckvorrichtung umfasst dabei ein Deckelelement 10 mit wenigstens einem topfförmigen Teilbereich 12. Der Rand des topfförmigen Teilbereichs 12 ist dabei einen Absatz bildend, sozusagen zweimal nach außen umgebogen, so dass sich ein erster lochscheibenartiger Bereich 14 als Anlagefläche für ein Begrenzungselement 20 und ein zweiter lochscheibenartiger Bereich 16 zum Anliegen an einer Gegenfläche, an der die Abdeckvorrichtung dichtend anliegen soll, ergibt.

In den topfförmigen Teilbereich 12 ist das Begrenzungselement 20 eingesetzt, das ein Volumen der Topfform begrenzt. Dabei umfasst das Begrenzungselement 20 eine Durchdringung 22, über die das abgegrenzte Volumen über einen definierten Durchflussquerschnitt zur Gegenfläche hin in Verbindung steht. Dabei ist ein Randbereich des Begrenzungselements 20 derart ausgebildet, dass er passend am ersten lochscheibenartigen Bereich 14 sowie am Übergangsbereich vom ersten lochscheibenartigen Bereich 14 hin zur zylindrischen Wandung der Topfform anliegt. Weiterhin ist der Rand des Begrenzungselements 20 axial und radial zum Deckelelement 12 hin beabstandet ausgebildet.

Zum Erzeugen eines Dichtelements 30 wird das Deckelelement 10 mit dem darin eingesetzten Begrenzungselement 20 in eine Spritzgussform eingesetzt, um das Dichtelement 30 wie in der Figur dargestellt durch einen Spritzgussprozess zu erzeugen. Dadurch, dass der äußere Rand des Begrenzungselements 20 zum Deckelelement 10 axial und radial beabstandet ist, umgreift das Dichtelement 30 den Rand des Begrenzungselements 20 für einen sicheren Halt des Begrenzungselements 20. Am Deckelelement 10 haftet das Dichtelement 30 beispielsweise unter Zuhilfenahme eines auf entsprechende Oberflächen des Deckelelements 10 aufgetragenen Haftvermittlers fest an. Das Dichtelement 30 wird dabei derart spritzgusstechnisch erzeugt, dass es bezugnehmend auf die Figur eine nach unten auskragende, radial umlaufende Dichtlippe 32 ausbildet, die bei einem entsprechenden Gegenpressen der Abdeckvorrichtung gegen die Gegenfläche an diese angedrückt und entsprechend verformt wird und damit eine gas- und flüssigkeitsdichte Abdichtung zwischen der Gegenfläche und der Abdeckvorrichtung sicherstellt.

In einer Ausführungsform können dabei natürlich auch die vom Dichtelement 30 berührten Oberflächenbereiche des Begrenzungselements 20 vor dem Einlegen in das Vulkanisierwerkzeug mit einem Haftvermittler versehen werden und auch diejenigen Bereiche, in denen sich das Deckelelement 10 und das Begrenzungselement 20 sozusagen berühren, da sich dann beim Einspritzen der Elastomermasse des Dichtelements 30 bei einer erhöhten Temperatur von beispielsweise 190 °C und unter einem erhöhten Druck von beispielsweise um die 400 bar, auch zwischen den beiden sich berührenden, mit Haftvermittler beschichteten Oberflächen von Deckel- und Begrenzungselement 10 und 20 eine sehr dünne Elastomerschicht ausbildet bzw. die Haftvermittler der beiden einander gegenüberliegenden Oberfläche miteinander zum Erzeugen einer festen Verbindung reagieren.

Die Abdeckvorrichtung kann dabei mehrere vorausgehend beschriebene topfförmige Teilbereiche 12 umfassen, wie dies im rechten Bereich der Figur angedeutet ist, wobei dann alle topfförmigen Bereiche 12, wie vorausgehend beschrieben, mit einem Begrenzungselement 20 und einem Dichtelement 30 ausgestattet sind.

## Patentansprüche

1. Vorrichtung, beinhaltend folgende Merkmale:
- Ein Deckelelement (10) mit wenigstens einem schalen- oder topfförmigen Teilbereich (12),
- ein in die Schalen- oder Topfform (12) eingesetztes Begrenzungselement (20), und
- ein Dichtelement (30), das wenigstens entlang eines Randes der Schalen- oder Topfform (12) angeordnet ist und das Deckel- und das Begrenzungselement (10, 20) miteinander verbindet,
**dadurch gekennzeichnet, dass**
- das Begrenzungselement (20) ein Volumen der Schalen- oder Topfform (12) für einen Volumenausgleich für von Ventilen mit hohem Druck ausgestoßenes Öl abgrenzt und eine das Begrenzungselement (20) durchdringende Durchdringung (22) definierten Querschnitts zum Verbinden des abgegrenzten Volumens hin zu einer Gegenfläche umfasst, an der wenigstens der Rand der Schalen- oder Topfform (12) zum abdichtenden Anliegen vorsehbar ist, und
- das Dichtelement (30) am Deckelelement (10) bei darin eingesetztem Begrenzungselement (20) angespritzt ist.

2. Vorrichtung nach Anspruch 1, wobei das Deckel- und/oder Begrenzungselement als insbesondere tiefgezogene Blechteile, insbesondere aus Stahl ausgebildet sind.

3. Vorrichtung nach einem der Ansprüche 1 bis 2, wobei das Dichtelement mit einer umlaufenden, hin zur Gegenfläche auskragenden Dichtlippe ausgebildet ist.

4. Vorrichtung nach einem der Ansprüche 1 bis 3, wobei das Dichtelement Elastomermaterial umfasst.

5. Vorrichtung nach einem der Ansprüche 1 bis 4, wobei der Rand des Begrenzungselements bei in das Deckelelement eingesetztem Begrenzungselement zum Deckelelement axial und radial beabstandet ist, so dass bei in das Deckelelement eingesetztem Begrenzungselement das Dichtelement den Rand des Begrenzungselements umgreift.

6. Vorrichtung nach einem der Ansprüche 1 bis 5, wobei der Rand der Schalen- oder Topfform einen Absatz bildend zweifach nach außen umgebogen ist, so dass ein erster lochscheibenartiger Bereich als Anlagefläche für das Begrenzungselement und ein zweiter lochscheibenartiger Bereich zum Gegenüberliegen der Gegenfläche ausgebildet ist.

7. Vorrichtung nach Anspruch 6, wobei das Begrenzungselement derart ausgebildet ist, dass es passend am ersten lochscheibenartigen Bereich sowie am Übergangsbereich vom ersten lochscheibenartigen Bereich hin zur zylindrischen Wandung der Schalen- oder Topfform zum Anliegen vorgesehen ist.

8. Vorrichtung nach einem der Ansprüche 1 bis 7, wobei das Deckelelement mehrere nebeneinander angeordnete, schalen- oder topfartige Teilbereiche umfasst, in denen jeweils ein Begrenzungselement angeordnet ist.

## Claims

1. Device, comprising the following features:
- a cover element (10) with at least one bowl- or cup-shaped portion (12),
- a delimiting element (20) inserted into the bowl or cup shape (12), and
- a sealing element (30), which is arranged at least along an edge of the bowl or cup shape (12) and connects the cover element (10) and the delimiting element (20) to each other, **characterized in that**
- the delimiting element (20) delimits a volume of the bowl or cup shape (12) for providing volume control for oil discharged at high pressure by valves and comprises a passage (22) of a defined cross section penetrating the delimiting element (20) for connecting the delimited volume to a counter surface, on which at least the edge of the bowl or cup shape (12) can be provided for sealing abutment, and
- the sealing element (30) is injection-moulded on the cover element (10) with the delimiting element (20) inserted therein.

2. Device according to Claim 1, the cover element and/or the delimiting element being formed as, in particular, deep-drawn sheet-metal parts, in particular of steel.

3. Device according to either of Claims 1 and 2, the sealing element being formed with a peripheral sealing lip projecting towards the counter surface.

4. Device according to one of Claims 1 to 3, the sealing element comprising elastomer material.

5. Device according to one of Claims 1 to 4, the edge of the delimiting element being at a distance axially and radially from the cover element when the delimiting element is inserted in the cover element, so that the sealing element engages around the edge of the delimiting element when the delimiting element is inserted in the cover element.

6. Device according to one of Claims 1 to 5, the edge of the bowl or cup shape being bent twice towards the outside, forming a shoulder, so that a first perforated disc-like region is formed as an abutment surface for the delimiting element and a second perforated disc-like region is formed for the opposing placement of the counter surface.

7. Device according to Claim 6, the delimiting element being formed in such a way that it is provided for abutting in a fitting manner against the first perforated disc-like region and against the transitional region from the first perforated disc-like region to the cylindrical wall of the bowl or cup shape.

8. Device according to one of Claims 1 to 7, the cover element comprising a number of bowl- or cup-like portions arranged next to one another, in each of which a delimiting element is arranged.

## Revendications

1. Ensemble présentant les caractéristiques suivantes :
- un élément de couvercle (10) qui présente au moins une partie (12) en forme de coque ou de chapeau,
- un élément de délimitation (20) inséré dans la forme (12) de coque ou de chapeau et
- un élément d'étanchéité (30) disposé au moins le long d'un bord de la forme (12) de coque ou de chapeau et reliant l'un à l'autre l'élément de couvercle et l'élément de délimitation (10, 20),
**caractérisé en ce que**
l'élément de délimitation (20) délimite un volume de la forme (12) de coque ou de chapeau destiné à compenser le volume d'huile expulsée sous haute pression par des soupapes et comporte un passage (22) de section transversale définie, qui traverse l'élément de délimitation (20) et qui relie le volume délimité à une surface complémentaire sur laquelle le bord de la forme (12) de coque ou de chapeau peut être prévue de manière à reposer de manière étanche et
**en ce que** l'élément d'étanchéité (30) est formé par injection sur l'élément de couvercle (10) après que l'élément de délimitation (20) y a été inséré.

2. Ensemble selon la revendication 1, dans lequel l'élément de couvercle et/ou l'élément de délimitation sont configurés comme pièces de tôle en particulier embouties et notamment en acier.

3. Ensemble selon l'une des revendications 1 et 2, dans lequel l'élément d'étanchéité est configuré avec une lèvre périphérique d'étanchéité qui déborde en direction de la surface complémentaire.

4. Ensemble selon l'une des revendications 1 à 3, dans lequel l'élément d'étanchéité compote un matériau élastomère.

5. Ensemble selon l'une des revendications 1 à 4, dans lequel lorsque l'élément de délimitation est inséré dans l'élément de couvercle, le bord de l'élément de délimitation est écarté axialement et radialement de l'élément de couvercle de telle sorte que l'élément d'étanchéité entoure le bord de l'élément de délimitation lorsque l'élément de délimitation est inséré dans l'élément de couvercle.

6. Ensemble selon l'une des revendications 1 à 5, dans lequel le bord de la forme en coque ou en chapeau est rabattu deux fois vers l'extérieur en formant un appendice de telle sorte qu'une première partie en forme de plaque perforée forme une surface d'appui pour l'élément de délimitation et qu'une deuxième partie en forme de plaque perforée vienne se placer face à la surface complémentaire.

7. Ensemble selon la revendication 6, dans lequel l'élément de délimitation est configuré de telle sorte qu'il vient se placer de manière adaptée sur la première partie en forme de plaque perforée ainsi que sur la partie de transition entre la première partie en forme de plaque perforée et la paroi cylindrique de la forme en coque ou en chapeau.

8. Dispositif selon l'une des revendications 1 à 7, dans lequel l'élément de couvercle comporte plusieurs parties en coque ou en chapeau disposées les unes à côté des autres et dans chacune desquelles un élément de délimitation est disposé.
